# EUROPÄISCHE PATENTSCHRIFT

(11) **EP 2 092 223 B1**
(45) Veröffentlichungstag und Bekanntmachung des Hinweises auf die Patenterteilung: **19.12.2012**
(21) Anmeldenummer: 08734621.9
(22) Anmeldetag: 14.03.2008
(51) Int. Cl.: F16K 17/10

(54) **DRUCKFÜHRENDES SYSTEM MIT EINER SICHERHEITSEINRICHTUNG ZUR ÜBERDRUCKABSICHERUNG**
PRESSURIZED SYSTEM WITH SAFETY DEVICE SECURING AGAINST OVERPRESSURE
SYSTÈME SOUS PRESSION COMPRENANT DISPOSITIF DE SÉCURITÉ DESTINÉ À PROTÉGER CONTRE LA SURPRESSION

(30) Priorität: 16.03.2007 DE 102007013359
(43) Veröffentlichungstag der Anmeldung: 26.08.2009
(73) Patentinhaber: Areva NP GmbH, 91052 Erlangen (DE)
(72) Erfinder: CONRADS, Hermann, Josef, 91024 Herzogenaurach (DE)
(74) Vertreter: Tergau & Walkenhorst
(86) Internationale Anmeldenummer: PCT/EP2008/002079
(87) Internationale Veröffentlichungsnummer: WO 2008/113529

(56) Entgegenhaltungen:
- WO-A-2005/008111
- US-A- 4 620 566
- US-A1- 2004 154 665

## Beschreibung

Die Erfindung betrifft ein druckführendes System, insbesondere einen Druckbehälter einer kerntechnischen Anlage, mit einer Sicherheitseinrichtung zur Überdruckabsicherung gemäß dem Oberbegriff des Anspruchs 1.

Ein derartiges System ist beispielsweise aus der US 4 620 566 A, dass die Merkmale des Oberbegriffs des Anspruchs 1 zeigt, bekannt.

In sämtlichen Gebieten der Technik, in denen Behältnisse oder Leitungen unter Druck stehen, finden sogenannte Sicherheitsarmaturen oder Druckarmaturen, insbesondere zur Druckentlastung und zur Drucksteuerung, Anwendung. Eine Druckentlastung oder eine Drucksteuerung kann dabei sowohl während eines normalen Betriebes als auch zur Sicherung einer Anlage mit unter Druck stehenden Komponenten erfolgen. Insbesondere Druckbehälter sind nach bestehenden technischen Regeln häufig gegen Überdruck abzusichern. Durch eine rechtzeitige und ausreichende Druckentlastung werden potentiell kritische Betriebszustände im Überdruckbereich konsequent und von vornherein unterbunden; die Durchführung flexibler Sicherheitsmaßnahmen wird verbessert. Dies ist insbesondere bei einem Kernkraftwerk mit einem unter Druck stehenden Primärsystem, welches zu schützende Komponenten wie etwa den Reaktorkern aufweist, von Relevanz.

Im Bereich von Kernkraftwerken sind insbesondere Druckwasserreaktor-Anlagen primärseitig mit derartigen Sicherheitsarmaturen ausgestattet. Diese enthalten üblicherweise ein oder mehrere Sicherheitsventile, die während des Normalbetriebes geschlossen sind und bei Überschreiten eines kritischen Drucks im Druckbehälter öffnen, um einen weiteren, möglicherweise gefährlichen Druckanstieg zu verhindern und den Innendruck in dem abzusichernden System auf ein gewünschtes, unkritisches Maß zu reduzieren. Beispielsweise kann eine Druckentlastung eines Kernreaktor-Druckbehälters bei einem Auslöse-Druckwert von rund 175 bar vorgesehen sein, wobei nach erfolgtem Druckabbau auf einen Wert von z.B. 150 bar das jeweilige Sicherheitsventil in der Regel wieder automatisch schließen sollte, um ein dauerhaftes Leck im Primärkreislauf und einen damit möglicher Weise verbundenen Aktivitätsübertritt in das Containment-Volumen der Reaktoranlage zu vermeiden.

Zur Einhaltung der gerade im Bereich von Kernkraftwerksanlagen besonders hohen Sicherheitsanforderungen und der behördlich vorgeschriebenen Zuverlässigkeitsstandards wird dort die Überdruckabsicherung der druckführenden Systeme üblicherweise durch eigenmediumbetätigte Sicherheitsventile realisiert, die entweder nach dem Be- oder nach dem Entlastungsprinzip arbeiten. Das heißt, die für den Betätigungs- bzw. Haltevorgang erforderliche Betätigungs- oder Haltekraft geht auf den auf den Ventilkolben einwirkenden Systemdruck des abzusichernden Systems selbst zurück. Für eine besonders hohe Einstellgenauigkeit der jeweiligen Schwellwerte (Öffnungs- und Schließdruck) werden insbesondere für die Überdruckabsicherung des Primärkreises die auch als Druckhalter-Sicherheitsventile bezeichneten eigenmediumbetätigten Sicherheitsventile in der Regel durch separate Steuereinrichtungen oder Steuerventile angesteuert. Diese gibt es prinzipiell in zwei verschiedenen Varianten, nämlich für Sicherheitsventile, die nach dem Be- oder nach dem Entlastungsprinzip arbeiten.

Je nach Arbeitsprinzip der Sicherheitsventile besteht die Aufgabe von Steuerventilen darin, deren Steuerraum mit Druck zu belasten oder ihn zu entlasten. Für den Betrieb wird von ihnen eine extreme Dichtigkeit in den Sitzen abverlangt, welche üblicherweise durch externe magnetische Zusatzlasten erreicht wird. Derartige Zusatzlasten sind insbesondere bei federbelasteten Steuerventilen herkömmlicher Bauart, die auf dem Funktionsprinzip des angeströmten Impulskegels beruhen, zur Verbesserung der Sitzdichtigkeit erforderlich, da bei diesen bauartbedingt bei steigendem Systemdruck die Flächenpressung am Sitz abnimmt. Alternativ sind auch motorbetätigte Steuerventile für Druckhalter-Sicherheitsventile bekannt.

Allen bislang bekannten Sicherheitsarmaturen, bei denen Druckhalter-Sicherheitsventile durch federbelastete Steuerventile betätigt werden, ist eine zwar sehr kleine, aber von Null verschiedene endliche Versagenswahrscheinlichkeit im Anforderungsfall gemeinsam. Um dennoch, insbesondere im primären Kühlkreislauf eines Kernkraftwerkes, unter allen denkbaren Umständen bei Erreichen oder Überschreiten eines kritischen Systemdrucks eine zuverlässige, und effektive Druckentlastung zu gewährleisten, erfolgt üblicherweise eine mehrfach redundante Auslegung/Anordnung der Druckabsicherungssysteme, insbesondere durch eine parallel geschaltete Ankopplung mehrerer Sicherheitsarmaturen oder Sicherheitsventile der genannten Art an das druckführende System bzw. an den Druckbehälter. Sofern die Sicherheitsarmaturen voneinander unabhängig arbeiten, was sich durch die Anwendung bzw. die technische Umsetzung entsprechender Auslegungs- und Konstruktionsprinzipien, die dem Fachmann bekannt sind, erreichen läßt, ist damit im Anforderungsfall sichergestellt, dass mit an Sicherheit grenzender Wahrscheinlichkeit zumindest eine Teilmenge der insgesamt vorhandenen, parallel geschalteten Sicherheitsventile öffnet und damit ein wirkungsvoller Druckabbau initiiert wird.

Schwieriger ist es hingegen, das Problem der endlichen Schließversagenswahrscheinlichkeit eines Druckhalter-Sicherheitsventils in den Griff zu bekommen. Wie bereits eingangs erwähnt, kommt es nämlich in dem zwar unwahrscheinlichen, aber nicht unmöglichen Fall, dass ein Sicherheitsventil nach erfolgtem Druckabbau auf den gewünschten Wert offenbleibt, zu einem kleinen Leck im druckführenden System, z.B. im Primärkreislauf eines Druckwasserreaktors. Ein derartiges Leck wird zwar von heutzutage üblichen Sicherheitssystem eines Kernkraftwerkes beherrscht, jedoch ist auf Grund des Leckwasseraustritts in das ReaktorContainment von einem längeren Stillstand und von umfangreichen und verhältnismäßig kostspieligen Reparaturen auszugehen.

Der Erfindung liegt daher die Aufgabe zugrunde, ein druckführendes System mit einer Sicherheitseinrichtung der oben genannten Art anzugeben, wobei die Sicherheitsarmatur sowohl bei Erreichen eines kritischen Systemdrucks mit hoher Zuverlässigkeit öffnet als auch nach erfolgtem Druckabbau wieder besonders zuverlässig schließt.

Diese Aufgabe wird erfindungsgemäß gelöst durch die Merkmale des Anspruchs 1.

Gelegentlich wird die jeweilige Steuereinrichtung im folgenden auch einfach als "Steuerventil" bezeichnet, womit aber nicht ausgeschlossen sein soll, dass es sich dabei je nach spezifischer Ausführungsform auch um eine mechanisch vergleichsweise komplexe Vorrichtung mit einer Mehrzahl von in Wirkverbindung stehenden beweglichen Komponenten und zugehörigen Strömungsräumen handeln kann.

Die Erfindung geht von der Überlegung aus, dass gemäß den bisherigen Betriebserfahrungen und den Ergebnissen von theoretischen und praktischen Untersuchungen die Schließversagenswahrscheinlichkeit eines gesteuerten Sicherheitsventils von bislang gebräuchlicher und bewährter Bauart mit einem Wert von typischerweise 10⁻²/ Anforderung in der Regel wesentlich größer ist als die Wahrscheinlichkeit für eine Fehlfunktion beim Öffnungsvorgang, die typischerweise einen Wert von 10⁻⁴/ Anforderung besitzt. Aus theoretischen Überlegungen ergibt sich weiterhin, dass sich bei der Reihenschaltung zweier solcher Sicherheitsventile in einem Strömungskanal die Gesamtwahrscheinlichkeit dafür, dass der Kanal im Anforderungsfall nicht wie vorgesehen für die Druckentlastung freigegeben wird, ungefähr additiv auf den einzelnen Öffnungswahrscheinlichkeiten zusammensetzt, mithin sich auf einen Wert von lediglich knapp 2 x 10⁻⁴/ Anforderung erhöht, während sich die Schließversagenswahrscheinlichkeiten multiplizieren, vorliegend also eine Gesamtversagenswahrscheinlichkeit von etwa (10⁻²)²/ Anforderung = 10⁻⁴ / Anforderung ergeben. Während also durch die Hintereinanderanordnung der beiden Sicherheitsventile, vorzugsweise in einer gemeinsamen Sicherheitsarmatur, die Zuverlässigkeit der Druckentlastungsmaßnahme im Anforderungsfall nur geringfügig beeinflußt wird, ist auf diese Weise eine substantielle Verbesserung der Schließfunktion erzielbar. Dadurch werden insbesondere bei einem Einsatz in einem Druckwasserreaktor ungewollte Leckagen des Primärkreislaufes besonders sicher vermieden. Dieses bereits bei der US 4 620 566 A realisierte Grundprinzip wird nunmehr durch die im Kennzeichen des Anspruchs 1 genannten Merkmale für einen noch zuverlässigeren Betrieb weiterentwickelt, wie weiter unten ausgeführt wird.

Speziell für die sicherheitstechnischen Belange im Kernkraftwerksbereich ist erfindungsgemäß jedes der beiden in der Sicherheitsarmatur in Reihe geschalteten Sicherheitsventile ein durch ein zugeordnetes Steuerventil angesteuertes eigenmediumbetätigtes Sicherheitsventil. Vorzugsweise ist dabei für jedes der beiden Sicherheitsventile ein eigenes, vom jeweils anderen Steuerventil unabhängig arbeitendes Steuerventil vorgesehen, welches erfindungsgemäß zu 100% passiv, das heißt nach dem sogenannten Ruheprinzip, arbeitet und ganz ohne magnetische Zusatzlasten oder dergleichen, sprich ohne aktive Komponenten, auskommt.

Von einem derartigen Steuerventil gehen zweckmäßigerweise wenigstens drei Leitungen aus: Die erste Leitung ist eine Druckentnahmeleitung (Messleitung oder Impulsleitung), mit der das Steuerventil mit dem Systemdruck im Druckbehälter beaufschlagbar ist. Die zweite Leitung ist eine Steuerleitung, über die das Steuerventil auf das Sicherheitsventil einwirkt. Beispielsweise wird zum Öffnen eines nach dem Entlastungsprinzip arbeitenden Sicherheitsventils das Sicherheitsventil über die Steuerleitung entlastet. Die dritte Leitung ist eine Drainageleitung (Ausblaseleitung), die entweder in die Atmosphäre führt oder - speziell bei kerntechnischen Anlagen - in einen Abblasetank (Druckhalterabblasetank) mündet. Beispielsweise findet das Entlasten eines nach dem Entlastungsprinzip arbeitenden Sicherheitsventils über die Steuerleitung und die Drainageleitung in den Abblasetank statt.

Besonders vorteilhaft ist es, wenn aufgrund der Auslegung bzw. Einstellung der zugehörigen Steuerventile der Öffnungsdruck des stromaufwärts im Strömungskanal angeordneten Sicherheitsventils höher eingestellt ist als der Öffnungsdruck des weiter stromabwärts angeordneten Sicherheitsventils. Dabei entspricht zweckmäßigerweise der Öffnungsdruck des stromaufwärtigen, dem abzusichernden Druckbehälter zugewandten Sicherheitsventils dem kritischen Systemdruck, bei dessen Erreichen bzw. Überschreiten die Druckentlastung erfolgen soll. Das heißt, bei kontinuierlich ansteigendem Systemdruck wird noch vor Erreichen des kritischen Druckwertes - bei noch geschlossenem stromaufwärtigen Sicherheitsventil - zuerst das stromabwärtige der beiden Sicherheitsventile durch entsprechende Ansteuerung vermittelt des ihm zugeordneten Steuerventils in die Öffnungsstellung gebracht, sofern es sich nicht bereits ohnehin in selbiger befindet, und in dieser gehalten. Damit befindet sich das System gewissermaßen in einem "Bereitschaftszustand" für eine möglicherweise bevorstehende Druckentlastung. Eine eventuelle Fehlfunktion des stromabwärtigen Sicherheitsventils kann bereits in diesem Zustand, das heißt noch vor Erreichen des kritischen Systemdrucks, erkannt und gegebenenfalls beseitigt oder zumindest bei den nachfolgenden Sicherheitsmaßnahmen bedacht werden. Sofern der Druck weiter ansteigt und den kritischen Wert erreicht bzw. überschreitet, öffnet schließlich auch das stromaufwärtige Sicherheitsventil und gibt den Strömungskanal zur Druckentlastung frei.

Weiterhin ist es ausgesprochen vorteilhaft, wenn der Schließdruck des stromaufwärts im Strömungskanal angeordneten Sicherheitsventils höher eingestellt ist als der Schließdruck des weiter stromabwärts angeordneten Sicherheitsventils. Das heißt, wenn nach erfolgtem Druckabbau der Systemdruck wieder auf einem Normalpegel angelangt ist, schließt zuerst das stromaufwärts im Strömungskanal angeordnete Sicherheitsventil. Falls es jedoch infolge eines unvorhergesehenen Schließversagens geöffnet bleibt, entweicht weiterhin Strömungsmedium aus dem Druckbehälter, und der Systemdruck sinkt weiter ab, bis schließlich das stromabwärtige Sicherheitsventil durch das ihm zugeordnete Steuerventil in Schließstellung gebracht wird. Da ein gleichzeitiges (bzw. derart zeitnahes) Schließversagen beider Sicherheitsventile in der Sicherheitsarmatur ausgesprochen unwahrscheinlich ist, wird eine ungewollte, über das für den eigentlichen Druckentlastungsvorgang hinausgehende Maß erforderlich Leckage des druckführenden Systems, z.B. des Primärkühlkreislaufes eines Druckwasserreaktors, sicher vermieden.

In diesem Sinne kann man auch davon sprechen, dass das stromaufwärtige "erste" Sicherheitsventil das eigentliche Druckabsicherungsventil der Sicherheitseinrichtung darstellt, und das ihm in Strömungsrichtung des bei der Druckentlastung entweichenden Mediums nachgeschaltete "zweite" Sicherheitsventil im Falle eines Schließversagens des ersten Sicherheitsventils als "Reserve" zur Verfügung steht, um den Druckbehälter bei Bedarf von der "Außenwelt" zu isolieren. Das zweite Sicherheitsventil kann daher auch als Sicherheitsisolierventil oder kurz Isolierventil bezeichnet werden.

Vorteilhafterweise arbeitet das stromaufwärtige Sicherheitsventil nach dem Entlastungsprinzip, während das stromabwärtige Sicherheitsventil (das Isolierventil) vorteilhafterweise nach dem Belastungsprinzip arbeitet. Mit anderen Worten: Das stromaufwärtige Sicherheitsventil öffnet, sobald das ihm zugeordnete Steuerventil die an den Steuerraum des Sicherheitsventils angeschlossene Steuerleitung freigibt und damit den Steuerraum entlastet. Sowohl der Öffnungsvorgang selbst als auch das vorherige Geschlossenhalten des stromaufwärtigen Sicherheitsventils werden vorzugsweise ausschließlich mit Hilfe des im Druckbehälter herrschenden Primärdrucks als Antriebsmittel bewerkstelligt. Das stromabwärtige Sicherheitsisolierventil hingegen wird vorteilhafterweise durch eine Druckbeaufschlagung seines Steuerraumes offen gehalten und schließt, sobald bei medienbedingt unter Druck gesetztem Strömungskanal die Druckbeaufschlagung des Steuerraumes durch das zugehörige Steuerventil unterbrochen wird. Auch hier erfolgen die Betätigungs- und Haltevorgänge vorteilhafterweise ausschließlich vermöge von durch den Primärdruck im Druckbehälter bereitgestellten bzw. aufgebrachten Kräften.

In erfindungsgemäßer Ausgestaltung ist das stromaufwärtige Sicherheitsventil derart stehend in der Sicherheitsarmatur angeordnet, dass sich sein Ventilkegel unterhalb des Ventilkolbens befindet und den zugehörigen Ventilsitz von oben verschließt. Durch das Eigengewicht des Ventilkegels ist damit im Normalbetrieb, insbesondere in Verbindung mit einer auf dem Entlastungsprinzip beruhenden Funktionsweise des Sicherheitsventils, eine besonders sichere Geschlossenhaltung mit hoher Dichtigkeit realisierbar. Demgegenüber ist das stromabwärtige Sicherheitsventil, das heißt das Sicherheitsisolierventil, erfindungsgemäß derart auf dem Kopf stehend in der Sicherheitsarmatur angeordnet, dass sich der Ventilkegel oberhalb des Ventilkolbens befindet und den zugehörigen Ventilsitz von unten her verschließt. In diesem Fall besitzt der Ventilkegel aufgrund seines Eigengewichts bei Abwesenheit von durch das Strömungsmedium im Strömungskanal bedingten Schließkräften - insbesondere wenn das stromaufwärtige "erste" Sicherheitsventil geschlossen ist - die Tendenz, in seine untere Anschlagposition zu sinken und dabei den Strömungskanal freizugeben, sprich zu öffnen. Dadurch wird während des Normalbetriebs der Sicherheitseinrichtung, bei dem das stromaufwärtige Sicherheitsventil den Strömungskanal absperrt, sowie in der "Bereitschaftsphase" für eine bevorstehende Druckentlastung und während der Druckentlastung selbst - gegebenenfalls unterstützt durch eine Druckbeaufschlagung des Steuerraums - eine sichere Offenhaltung des Sicherheitsisolierventils erreicht. Es muss also nur das stromaufwärtige Sicherheitsventil auf eine entsprechende Öffnungsaufforderung durch das zugehörige Steuerventil ansprechen, um bei Erreichen eines kritischen Systemdrucks die Druckentlastung des Systems einzuleiten.

Trotz der Reihenschaltung des Sicherheitsisolierventils mit dem eigentlichen (stromaufwärtigen) Sicherheitsventil hängt damit die Versagenswahrscheinlichkeit für die Druckentlastungsmaßnahme insgesamt nur von der im allgemeinen ausgesprochen geringen Öffnungsversagenswahrscheinlichkeit des stromaufwärtigen Sicherheitsventils und seines Steuerventils ab; das anschließende Wiederverschließen nach erfolgter Druckentlastung ist hingegen doppelt abgesichert, da mit hoher Wahrscheinlichkeit zumindest eines der beiden Sicherheitsventile wieder schließt, was ausreicht um den Strömungskanal insgesamt nach außen abzusperren.

Zwar ist es prinzipiell möglich, die beiden Sicherheitsventile räumlich vergleichsweise weit voneinander beabstandet und getrennt in einer an das druckführende System angeschlossenen Druckentlastungsleitung anzuordnen bzw. einzubauen; besonders bevorzugt sind die beiden Sicherheitsventile jedoch unmittelbar zueinander benachbart in einem gemeinsamen Armaturengehäuse untergebracht. Bei einem als integrales Gußteil ausgeführten Armaturengehäuse läßt sich nämlich eine besonders kompakte und druckstabile Ausführung realisieren.

Bevorzugt umfaßt die jeweilige Steuereinrichtung (das "Steuerventil") einen Druck-Weg-Umformer, in dem eine Druckdifferenz zwischen einem Druckraum und einem davon getrennten anderen Raum in eine Bewegung eines Stellkörpers umsetzbar ist, wobei mit dem Stellkörper ein Steuerteil zum Ansteuern des der Steuereinrichtung zugeordneten Sicherheitsventils auslösbar ist. Zweckmäßigerweise ist dabei der Druckraum der Steuereinrichtung über eine der Druckentnahmeleitungen mit dem druckführenden System und der andere Raum über eine Drainageleitung mit einem Abblasebehälter verbunden. Konkrete Ausführungsvarianten eines derartigen Steuerventils, welches unter der Bezeichnung SIERION in seinen Grundzügen in Zusammenarbeit der Firmen Herion und AREVA (ehemals Framatome, davor Siemens) entwickelt und später von der Firma AREVA verbessert wurde, sind detailliert beispielsweise in der DE 196 28 610 C1 oder in der DE 198 24 494 C1 beschrieben. Es handelt sich dabei um ein federbelastendes Steuerventil mit nicht durchströmtem Umformer, welches ohne magnetischen Zusatzlasten oder dergleichen vollständig passiv, das heißt nach dem Ruheprinzip, arbeitet. Es zeichnet sich durch eine sehr hohe Sitzdichtigkeit aus, wobei die Beaufschlagung mit Primärdruck über die Druckentnahmeleitung eine erhöhte Flächenpressung bei erhöhtem Druck bewirkt. Die Druckentnahmeleitung ist vorteilhafterweise selber nicht durchströmt; das heißt, es kann auf diesem Wege kein Primärmedium nach außen entweichen. In manchen Anwendungsfällen kann aber, abhängig von der jeweiligen Ausführung der Bohrungen im Gehäuse (Impuls-, Druckentnahme- und Steuerbohrung), auch eine Variante mit durchströmbarer Druckentnahmeleitung zweckmäßig sein. Zudem arbeitet das SIERION-Steuerventil stabil bei allen möglichen Zuständen des Mediums (Wasserstoff, Dampf, Sattwasser, unterkühltes und kaltes Druckwasser). Es stehen Varianten sowohl für Sicherheitsventile nach dem Belastungsprinzip als auch für solche nach dem Entlastungsprinzip zur Verfügung.

Die mit der Erfindung erzielten Vorteile entstehen insbesondere darin, dass durch die Reihenschaltung gesteuerter, eigenmediumbetätigter Sicherheitsventile in Verbindung mit vollständig passiv arbeitenden, durch eine Beaufschlagung mit Primärdruck auslösbaren Steuerventilen, insbesondere bei geeigneter wechselseitiger Abstimmung der Öffnungsdrücke und Schließdruckdifferenzen, bei überschaubarem Konstruktions- und Verschaltungsaufwand ein besonders zuverlässiges Druckabsicherungssystem für einen Druckbehälter, insbesondere für einen Reaktordruckbehälter einer Kernkraftanlage, verwirklicht ist, das nach einer erfolgten Druckentlastung besonders sicher und zuverlässig wieder in seinem "Normalzustand", in dem der Druckbehälter medienseitig von der Außenwelt isoliert ist, zurückkehrt. Aufwendige "Faltenbalg"-Konstruktionen oder dergleichen, wie sie in anderen Zusammenhängen bei der Reihenschaltung von Sicherheitsventilen notwendig sind, sind vermieden. Speziell bei der Anwendung zur Druckabsicherung des Primärkreislaufes einer Druckwasserreaktor-Anlage werden mit der hier vorgestellten Lösung mögliche Aktivitätsübertritte ins Containment mit hoher Sicherheit auf das zur Druckentlastung unbedingt notwendige Minimum reduziert, so dass die entsprechenden externen Sicherheitssysteme für die Beherrschung geringerer Aktivitätsmengen ausgelegt werden können.

Ein Ausführungsbeispiel der Erfindung wird anhand einer Zeichnung näher erläutert. Darin zeigen:
- Fig. 1: ein schematisches Schaltbild einer Sicherheitseinrichtung zur Druckabsicherung eines Druckbehälters mit einer im Schnitt dargestellten, zwei in Reihe geschaltete Sicherheitsventile umfassenden Sicherheitsarmatur, und
- Fig. 2: ein Diagramm mit einer Druckskala, in welche die Öffnungs- und Schließdrücke der beiden Sicherheitsventile der Sicherheitseinrichtung gemäß Fig. 1 eingetragen sind.

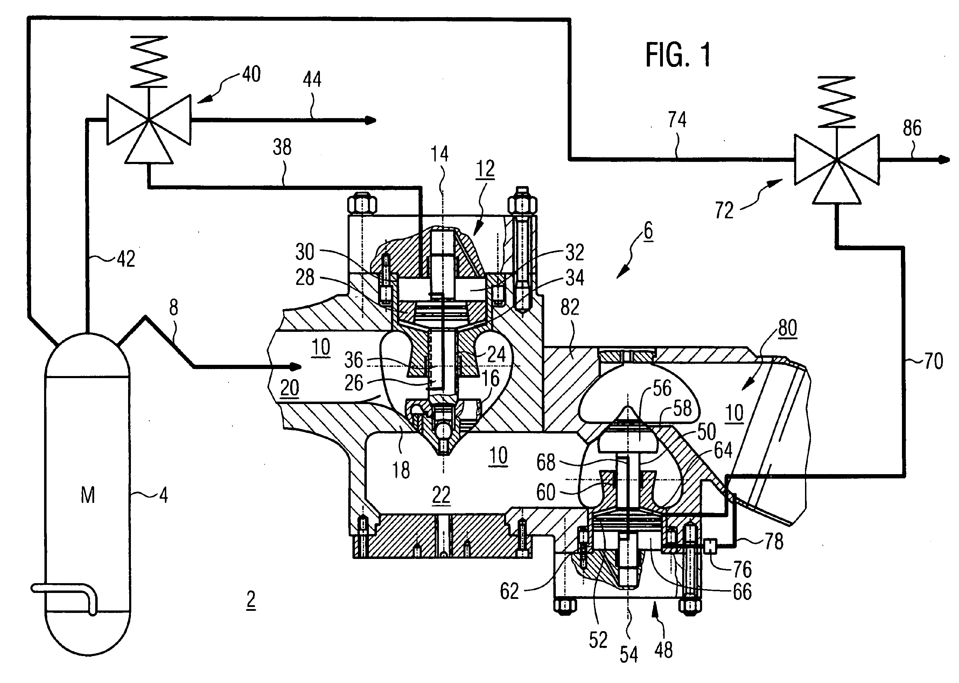

Die in Fig. 1 dargestellte Sicherheitseinrichtung 2 dient zur Überdruckabsicherung eines mit einem unter Druck stehenden, flüssigen oder gasförmigen Strömungsmedium M (hier: Reaktorkühlmittel) befühlten Druckbehälters 4, hier eines Reaktordruckbehälters einer Druckwasserreaktoranlage. Aufgabe der Sicherheitseinrichtung 2 ist es, eine Druckentlastung des Druckbehälters 4 einzuleiten, sobald der in seinem Inneren herrschende Druck einen vorgegebenen, als kritisch angesehenen Wert erreicht bzw. überschreitet, indem dem unter Überdruck stehenden Strömungsmedium M Gelegenheit gegeben wird, zumindest teilweise und in möglichst kontrollierter Weise aus dem Druckbehälter 4 zu entweichen. Dazu ist an dem Druckbehälter eine mit einer Sicherheitsarmatur 6 ausgestattete Druckleitung 8 angeschlossen. Der Innenraum der Druckleitung 8 bildet einen Strömungskanal 10, über den das Strömungsmedium M - angetrieben durch seinen eigenen Innendruck - im Entlastungsfall in druckmindernder Weise aus dem Druckbehälter 4 abströmen kann. Es wird dann auslassseitig der Sicherheitsarmatur 6 in einem hier nicht näher dargestellten Sammelbehälter oder Auffangsystem gesammelt.

Im Normalfall, also unterhalb des kritischen Systemdrucks von hier z.B. 175 bar, ist der Strömungskanal 10 jedoch durch ein in die Sicherheitsarmatur 6 integriertes Sicherheitsventil 12 verschlossen. Zu diesem Zweck weist das Sicherheitsventil 12 einen entlang einer Hauptachse 14 verschiebbar gelagerten, in etwa zwiebelförmigen Ventilkegel 16 auf, der im Normalzustand in seiner unteren Anschlagposition mit vergleichsweise hoher Flächenpressung auf einem korrespondierenden, unter ihm angeordneten Ventilsitz 18 aufliegt und somit die Durchtrittsöffnung für das Strömungsmedium M zwischen dem Einlassabschnitt 20 des Strömungskanals 10 und dem Zwischenabschnitt 22 druck- und mediendicht versperrt.

Der Ventilkegel 16 ist an seiner dem Ventilsitz 18 abgewandten Oberseite über eine in einem Führungszylinder 24 geführte zylindrische Kolbenstange 26 mit einem ebenfalls zylindrischen Ventilkolben 28 verbunden, der einen größeren Durchmesser als die Kolbenstange 26 aufweist und seinerseits in einem auf seinen Durchmesser abgestimmten Führungszylinder, im folgenden als Kolbenzylinder 30 bezeichnet, derart geführt ist, dass die aus Ventilkolben 28, Kolbenstange 26 und Ventilkegel 16 gebildete bewegliche Ventileinheit entlang der Hautachse 14 des Sicherheitsventils 12 zwischen einer oberen und einer unteren Anschlagposition verschiebbar, in Querrichtung aber möglichst spielfrei gelagert ist. Der Ventilkolben 28 ist mit Hilfe von hier nicht näher bezeichneten Kolbendichtringen gegen den ihn umgebenden Kolbenzylinder 30 abgedichtet und unterteilt diesen in einen - bezogen auf die hier dargestellte Einbaulage - oberen Ventilraum 32 und einen unteren Ventilraum 34. Zwischen dem unteren Ventilraum 34 und dem Einlassabschnitt 20 des Strömungskanals 10 ist ein gedrosselter Übertritt von Strömungsmedium M durch Spaltleckage zwischen der Außenseite der Kolbenstange 26 und der Innenseite des Führungszylinders 24 ermöglicht. Weiterhin kann unter Druck stehendes Strömungsmedium M über einen in die Kolbenstange 26 und in den Ventilkolben 28 integrierten Überströmkanal 36 vom Einlassabschnitt 20 des Strömungskanals 10 in den oberen Ventilraum 32 übertreten und diesen - sofern die an ihn angeschlossene, als Entlastungsleitung wirksame Steuerleitung 38 geschlossen ist - unter Druck setzen. Da die Summe der für die Schließkraft wirksamen Flächen, nämlich an der Oberseite des Ventilkolbens 28 und des Ventilkegels 16, größer ist als die für die entgegengerichtete Öffnungskraft an der Unterseite des Ventilkolbens 28 wirksame Fläche, wird der Ventilkegel 16 nach unten auf seinen Ventilsitz 18 gepresst, und zwar um so stärker, je höher der Systemdruck im Druckbehälter 4 und damit auch in der an ihn angeschlossenen Druckleitung 8 bzw. im Einlassabschnitt 20 des Strömungskanals 10 ist. Dies ist zugleich die untere Anschlagstellung der aus Ventilkolben 28, Kolbenstange 26 und Ventilkegel 16 gebildeten beweglichen Ventileinheit, in der das Volumen des unteren Ventilraums 34 minimal, das Volumen des oberen Ventilraums 34 (des sogenannten Steuerraums) hingegen maximal ist. Durch das Eigengewicht der beweglichen Ventileinheit wird - in Verbindung mit dem aufrecht "stehenden" Einbau des Sicherheitsventils 12 in die Sicherheitsarmatur 6 - die Schließkraft noch verstärkt.

Durch Öffnen der bereits erwähnten Steuerleitung 38 kann der obere Ventilraum 32, der sogenannte Steuerraum, des Sicherheitsventils 12 druckentlastet werden, so dass nunmehr die nach oben gerichtete Kraft auf den Ventilkolben infolge der an seiner Unterseite wirkenden hydraulischen Druckkraft (bedingt durch die Spaltleckage des Strömungsmediums M im Spalt zwischen Kolbenstange 26 und Führungszylinder 24) überwiegt und den Ventilkolben 28 und damit auch den Ventilkegel 16 nach oben in seine Öffnungsstellung drückt. Damit wird die Druckentlastung des Druckbehälters 4 eingeleitet. Sofern die Steuerleitung 38 nicht wieder geschlossen wird, bleibt das Sicherheitsventil 12 solange geöffnet, wie die durch den Eigendruck des Strömungsmediums M hervorgerufene Hebekraft die nunmehr im Wesentlichen nur noch gewichtsbedingte Schließkraft übersteigt.

Bei der Überdruckabsicherung eines Reaktordruckbehälters soll aber in der Regel das Sicherheitsventil 12 bereits wesentlich früher wieder geschlossen werden, um den Austritt des Strömungsmediums M über den Strömungskanal 10 in den Auffangbehälter auf das notwendige Maß zu beschränken. Gemäß obigen Ausführungen wird dazu die als Entlastungsleitung wirksame Steuerleitung 38 wieder verschlossen, so dass sich infolge der gedrosselten Überströmung des Strömungsmediums M durch den Überströmkanal 36 in den nunmehr abgeschlossenen Steuerraum 32 der erforderliche Schließdruck rasch wieder aufbauen kann. Beim Absenken des Ventilkolbens 28 wird das im unteren Ventilraum 34 befindliche Strömungsmedium M wieder in den Strömungskanal 10 zurückgedrückt, wobei die Abwärtsbewegung und das Aufsetzen des Ventilkegels 16 auf dem Ventilsitz 18 durch die Drosselwirkung des Leckagespalts zwischen Kolbenstange 26 und Führungszylinder 24 gedämpft wird.

Für eine besonders präzise und zuverlässige Steuerung der Öffnungs- und Schließvorgänge des Sicherheitsventils 12 in Abhängigkeit vom Systemdruck im Druckbehälter 4 ist eine hier nur schematisch angedeutete federbelastende Steuereinrichtung 40 ("Steuerventil") vorgesehen, die einerseits über die Druckentnahmeleitung 42 (Meßleitung oder Impulsleitung) mit dem Druckbehälter 4 und andererseits über die Steuerleitung 38 mit dem Steuerraum 32 des Sicherheitsventils 12 verbunden ist. Bei der dritten Leitung, die an das Steuerventil 40 angeschlossen ist, handelt es sich um eine Drainageleitung 44, welche an ihrem anderen Ende in einen hier nicht dargestellten Abblasetank oder Sammelbehälter mündet. Dabei kann es sich insbesondere um denselben Sammelbehälter handeln, an den auch der Strömungskanal 10 der Druckleitung 8 ausgangsseitig der Sicherheitsarmatur 6 angeschlossen ist. Über die Druckentnahmeleitung 42 wird ein Druckraum eines Druck-Weg-Umformers der Steuereinrichtung 40 mit dem Systemdruck im Druckbehälter 4 beaufschlagt, so dass der Druck-Weg-Umformer seinerseits über einen Stellkörper ein die Steuerleitung 38 entweder verschließendes oder mit der Drainageleitung 44 strömungsseitig verbindendes Steuerteil auslöst. Auf diese Weise wird durch die Steuereinrichtung 40 die Druckentlastung des Steuerraumes 32 des Sicherheitsventils 12 und damit wie oben im Detail beschrieben dessen eigenmediumgetriebenes Öffnen und Schließen gesteuert. Die Druckentnahmeleitung 42 dient gewissermaßen nur zur Messung des aktuellen Systemdrucks; sie ist jedoch selbst nicht durchströmt (kein Massenstrom des Strömungsmediums M.)

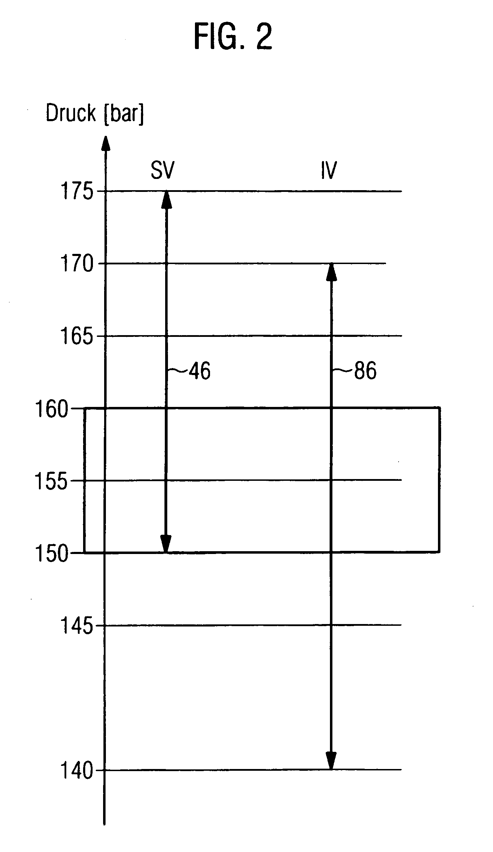

Der jeweilige Ansprech- bzw. Auslösedruck der Steuereinrichtung 40 ist grob durch deren Konstruktion und die Dimensionierung bzw. Auslegung ihrer einzelnen Komponenten vorgegeben. Die Feineinstellung erfolgt vor der eigentlichen Inbetriebnahme im Produktiv-einsatz beispielsweise durch Variation der Federvorspannung der auf den Stellkörper oder auf das Steuerteil einwirkenden Federn. Damit ergibt sich für den Öffnungs- und Schließdruck des durch die Steuereinrichtung 40 angesteuerten Sicherheitsventils 12 das im linken Teil des Druckdiagramms gemäß Fig. 2 durch den Doppelpfeil 46 dargestellte Bild (unterhalb der Beschriftung SV = Sicherheitsventil): Der normale Betriebsbereich des Druckbehälters 4, in dem das Sicherheitsventil 12 geschlossen ist, liegt in einem Druckintervall von z.B. 150 bar bis 160 bar (in Fig. 2 grau unterlegt). Falls nun im Rahmen eines betrieblichen Störfalls der Druck im Druckbehälter 4 vergleichsweise stark ansteigt, spricht bei einem kritischen Systemdruck von z.B. 175 bar die Steuereinrichtung 40 an und öffnet das Sicherheitsventil 12, wodurch die gewünschte Druckentlastung des Druckbehälters 4 eingeleitet wird. Die obere Pfeilspitze des linken Doppelpfeils 46 markiert daher in Fig. 2 den Öffnungsdruck des Sicherheitsventils 12. Durch das Ausströmen des Strömungsmediums M aus dem Druckbehälter 4 fällt der Druck nach kurzer Zeit wieder auf das normale Niveau ab. Um einen Übertritt von unnötig großen Mengen an Strömungsmedium M in das äußere Reaktorcontainment zu verhindern, ist die Steuereinrichtung 40 so eingestellt, dass sie bei unterschreiten eines unteren Grenzwertes von z.B. 150 bar das zuvor geöffnete Sicherheitsventil 12 automatisch wieder schließt. Die untere Pfeilspitze des Doppelpfeiles 46 markiert also in Fig. 2 den Schließdruck des Sicherheitsventils 12.

Allerdings hat sich im Rahmen der bisherigen betrieblichen Erfahrung herausgestellt, dass der Vorgang des Wiederverschließens des Sicherheitsventils 12 mit einer nicht völlig zu vernachlässigenden Versagenswahrscheinlichkeit behaftet ist. Um auch in einem derartigen Versagensfall ein unerwünschtes Entweichen von Strömungsmedium M aus dem Druckbehälter 4 über das zur Druckentlastung auf Normaldruckniveau erforderliche Maß hinaus sicher zu verhindern, weist die Sicherheitsarmatur 6 in der Art einer redundanten Auslegung zentraler Sicherheitsmerkmale ein dem Sicherheitsventil 12 strömungsseitig nachgeschaltetes zweites Sicherheitsventil 48 auf, das aufgrund seiner nachfolgend zu beschreibenden Funktionsweise auch als Sicherheitsisolierventil oder kurz Isolierventil bezeichnet werden kann. Dieses zweite, stromabwärtige Sicherheitsventil 40 ist durch seine Konstruktion spezifisch dafür ausgelegt, einerseits im Falle eines Schließversagens des ersten, stromaufwärtigen Sicherheitsventils 12 zuverlässig den Strömungskanal 10 zu verschließen, andererseits den vorherigen Druckentlastungsvorgang nicht zu behindern.

Das als Isolierventil wirksame Sicherheitsventil 48 ist in Bezug auf seine mechanischen Komponenten grundsätzlich ähnlich aufgebaut wie das weiter stromaufwärts im Strömungskanal 10 angeordnete Sicherheitsventil 12, weist also auch einen über eine Kolbenstange 50 mit einem Ventilkolben 52 verbundenen, entlang einer Hauptachse 54 verschiebbar gelagerten Ventilkegel 56 auf, der im Schließzustand gegen einen zugehörigen Ventilsitz 58 gedrückt wird. Die Kolbenstange 50 ist in einem Führungszylinder 60 geführt, der sich in Richtung zum Ventilkolben 52 hin zu einem diesen umgebenden Kolbenzylinder 62 erweitert. Der Ventilkolben 52 ist mit nicht näher bezeichneten Kolbendichtringen gegen den Kolbenzylinder 62 abgedichtet und unterteilt diesen in einen - bezogen auf die in der Fig. 1 dargestellte Einbaulage - oberen Ventilraum 64 und in einen unteren Ventilraum 66. Der untere Ventilraum 66 steht über einen in die Kolbenstange 50 und in den Ventilkolben 52 integrierten Überströmkanal 68 in Strömungsverbindung mit dem Zwischenabschnitt 22 des Strömungskanals 10.

Im Unterschied zum Sicherheitsventil 12 arbeitet das Sicherheitsventil 48 nach dem Belastungsprinzip. Demgemäß ist der obere Ventilraum 64 als Steuerraum ausgelegt und bedarfsweise über die an ihn angeschlossene Steuerleitung 70, die dann als Belastungsleitung wirksam ist, mit Druck beaufschlagbar. Der erforderliche Betätigungsdruck wird - gesteuert durch die zugehörige federbelastete Steuereinrichtung 72 - über die Druckentnahmeleitung 74 dem abzusichernden Druckbehälter 4 entnommen, wobei die an das Belastungsprinzip des Sicherheitsventils 48 angepaßte Steuereinrichtung 72 während der Beaufschlagungsphase die dazu erforderliche strömungsseitge Verbindung zwischen der Druckentnahmleitung 74 und der Steuerleitung 70 herstellt.

Weiterhin unterscheidet sich das Sicherheitsventil 48 insofern vom Sicherheitsventil 12, als an den unteren Ventilraum 66 eine mit einem Drosselventil 76 versehene Entleerungsleitung 78 angeschlossen ist, wobei die Drosselwirkung des Drosselventils 76 wesentlich höher gewählt bzw. eingestellt ist, als die Drosselwirkung des in die Kolbenstange 50 integrierten Überströmkanals 68. Im Ausführungsbeispiel gemäß Fig. 1 ist die Entleerungsleitung 78 mit dem Auslassabschnitt 80 des Strömungskanals 10 verbunden. Schließlich ist das Sicherheitsventil 48 gegenüber dem Sicherheitsventil 12 um 180° gedreht "auf dem Kopf stehend" im gemeinsamen Armaturengehäuse 82 angeordnet, so dass das Eigengewicht der aus Ventilkegel 56, Kolbenstange 50 und Ventilkolben 52 gebildeten beweglichen Ventileinheit diese tendenziell, sprich bei Abwesenheit hydraulischer/pneumatischer Kräfte, nach unten in die geöffnete Ventilstellung drückt.

Die Funktionsweise des Gesamtsystems läßt sich damit wie folgt beschreiben: Im normalen Betriebsbereich mit einem Behälterdruck von rund 150 bar bis 160 bar ist, wie bereits erwähnt, dass Sicherheitsventil 12 geschlossen. Die bewegliche Ventileinheit, insbesondere der Ventilkegel 56, des Sicherheitsventils 48 befindet sich infolge ihres Eigengewichts und des "auf dem Kopf" stehenden Einbaus hingegen in ihrer unteren Anschlagposition, das heißt in Öffnungsstellung. Der stromaufwärts des Ventilkegels 56 und stromabwärts des Ventilkegels 16 gelegene Zwischenabschnitt 22 und der stromabwärts des Ventilkegels 56 gelegene, in den Sammelbehälter mündende Auslassabschnitt 80 des Strömungskanals 10 befinden sich auf Umgebungsdruck, während stromaufwärts des Ventilkegels 16 das Strömungsmedium M unter dem Betriebsdruck des Druckbehälters 4 anlegt. Die Steuerleitung 70 ist noch nicht belastet. Falls nun infolge eines betrieblichen Störfalles der Druck im Druckbehälter 4 deutlich über das Normalniveau ansteigt, z.B. auf etwa 170 bar, ist mit einem baldigen Erreichen des kritischen Drucks von hier 175 bar zu rechnen, bei dem die Steuereinrichtung 40 gemäß ihrer Voreinstellung anspricht, den Steuerraum 32 des Sicherheitsventils 12 über die Steuerleitung 38 und die Drainageleitung 44 entlastet und somit den Ventilkegel 16 - getrieben durch das unter Druck stehende Strömungsmedium M selbst - in seine Öffnungsstellung steuert, mithin die Druckentlastung des Druckbehälters 4 einleitet.

In Vorbereitung auf diesen Vorgang, insbesondere um ein durch die hydrodynamischen Vorgänge im Strömungskanal 10 und in den Ventilräumen während des Druckentlastungsvorganges bedingtes ungewolltes Verschließen des in Öffnungsstellung befindlichen Sicherheitsventils 48 zu verhindern, ist die Steuereinrichtung 72 im Ausführungsbeispiel derart eingestellt, dass sie ab einem Druck von 170 bar die Steuerleitung 70 und damit den Steuerraum 64 des Sicherheitsventils 48 (des "Isolierventils") belastet. Dies ist im Druckdiagramm gemäß Fig. 2 durch die obere Pfeilspitze des rechten Doppelpfeiles 84 (unter der Überschrift IV = Isolierventil) gekennzeichnet. Die dabei zwischen der Kolbenstange 50 und dem Führungszylinder 60 stattfindende Spaltleckage von Strömungsmedium M ist bei entsprechend spielfreier Ausführung volumenmäßig zu vernachlässigen.

Falls nach dem Erreichen des Auslösedrucks für die Steuereinrichtung 72 von 170 bar ein weiterer Druckanstieg auf den kritischen Wert von 175 bar noch verhindert werden kann, insbesondere durch rechtzeitig eingeleitete Gegenmaßnahmen wieder der Normalbetriebszustand erreicht wird, so muß lediglich die Steuereinrichtung 72 manuell "zurückgesetzt" werden, um die Sicherheitseinrichtung 2 in ihren Ausgangszustand zu versetzen. Anderenfalls wird durch die bei 175 bar erfolgende Öffnung des Sicherheitsventils 12 die Druckentlastung des Druckbehälters 4 eingeleitet. Während dieses Vorganges wird das Sicherheitsventil 48 aufgrund der Druckbelastung seines Steuerraumes 64 sicher offengehalten.

Nach erfolgtem Druckabbau auf einen Wert von 150 bar sollte gemäß den bisherigen Ausführungen normalerweise das Sicherheitsventil 12 wieder schließen (siehe auch Fig. 2). Falls dies jedoch aufgrund einer zwar unwahrscheinlichen, jedoch nicht völlig auszuschließenden Fehlfunktion entweder des Sicherheitsventils 12 selber oder seines Steuerventils 40 oder eines unerwarteten Verschlusses der Steuerleitung 38 nicht der Fall sein sollte, so steht immer noch das Sicherheitsventil 48 zum Absperren des Strömungskanals 10 zur Verfügung. Eine ständige Überwachung des Entlastungsvorganges oder eine manuelle Bedienung des Sicherheitsventils 48 ist nicht erforderlich, da die Steuereinrichtung 72 so konstruiert und eingestellt ist, dass das Sicherheitsventil 48 nach einem Druckabfall auf einen Wert von 140 bar oder weniger automatisch schließt. Dies ist in Fig. 2 durch das untere Pfeilende des rechten Doppelpfeiles 84 angedeutet (Schließdruck).

Dazu wird die Druckbelastung des Steuerraumes 64 des Sicherheitsventils 48 unterbrochen bzw. beendet, indem ein geeigneter Stellkörper der Steuereinrichtung 72 das ventilseitige Ende der Druckentnahmeleitung 74 verschließt und die Steuerleitung 70 mit der Drainageleitung 86 verbindet. Das unter Druck befindliche, durch den Strömungskanal 10 strömende Strömungsmedium M kann nun durch den Überströmkanal 68 in den unteren Ventilraum 66 einströmen und durch seine Expansion den Ventilkolben 52 und damit die gesamte bewegliche Ventileinheit entgegen ihrer Gewichtskraft nach oben in die Schließstellung drücken, so dass der Ventilkegel 56 fest gegen den über ihm befindlichen Ventilsitz 58 gepreßt wird. Das gegebenenfalls zuvor im oberen Ventilraum 64 vorhandene sowie im geringen Umfang durch den Spalt zwischen der Kolbenstange 50 und dem Führungszylinder 60 aus dem Strömungskanal 10 nachströmende Strömungsmedium M tritt dabei über die Steuerleitung 70 und die ihr nunmehr nachgeschaltete Drainageleitung 86 aus und sammelt sich im Sammelbehälter. Aufgrund der äußerst geringen Volumenströme läßt sich eine derartige Leckage ausgezeichnet mit einfach gehaltenen Mitteln beherrschen. Dies gilt entsprechend für den gleichfalls äußerst geringen Leckstrom, der über die zur späteren Rückbewegung des Ventilkolbens 52 in seine untere (Öffnungs-) Stellung erforderliche Entleerungsleitung 78 mit dem Drosselventil 76 "ins Freie" entweicht.

Selbst wenn also das eigentliche Sicherheitsventil 12 nach der Druckentlastung nicht ordnungsgemäß schließen sollte, so wird durch das in Reihe geschaltete Sicherheitsventil 48 eine übermäßige Entleerung des Druckbehälters 4 vermieden.

### Bezugszeichenliste

- 2: Sicherheitseinrichung
- 4: Druckbehälter
- 6: Sicherheitsarmatur
- 8: Druckleitung
- 10: Strömungskanal
- 12: Sicherheitsventil
- 14: Hauptachse
- 16: Ventilkegel
- 18: Ventilsitz
- 20: Einlassabschnitt
- 22: Zwischenabschnitt
- 24: Führungszylinder
- 26: Kolbenstange
- 28: Ventilkolben
- 30: Kolbenzylinder
- 32: oberer Ventilraum (Steuerraum)
- 34: unterer Ventilraum
- 36: Überströmkanal
- 38: Steuerleitung
- 40: Steuereinrichtung ("Steuerventil")
- 42: Druckentnahmeleitung
- 44: Drainageleitung
- 46: Doppelpfeil
- 48: Sicherheitsventil
- 50: Kolbenstange
- 52: Ventilkolben
- 54: Hauptachse
- 56: Ventilkegel
- 58: Ventilsitz
- 60: Führungszylinder
- 62: Kolbenzylinder
- 64: oberer Ventilraum (Steuerraum)
- 66: unterer Ventilraum
- 68: Überströmkanal
- 70: Steuerleitung
- 72: Steuereinrichtung ("Steuerventil")
- 74: Druckentahmeleitung
- 76: Drosselventil
- 78: Entleerungsleitung
- 80: Auslassabschnitt
- 82: Armaturengehäuse
- 84: Doppelpfeil
- 86: Drainageleitung

## Patentansprüche

1. Druckführendes System mit einem Druckbehälter (4) und mit einer Sicherheitseinrichtung (2) zur Überdruckabsicherung, wobei
● die Sicherheitseinrichtung (2) eine Sicherheitsarmatur (6) und eine Steuereinrichtung (40, 72) umfasst,
● die Steuereinrichtung (40, 72) impulsseitig über eine Druckentnahmeleitung (42, 74) mit dem druckführenden System verbunden ist und nach dem Ruheprinzip arbeitet,
● die Sicherheitsarmatur (6) in einer an den Druckbehälter (4) angeschlossenen Druckleitung (8) angeordnet ist,
● der Innenraum der Druckleitung (8) einen Strömungskanal (10) bildet, über den im Druckbehälter (4) vorhandenes Strömungsmedium (M) im Entlastungsfall druckmindernd abströmen kann,
● die Sicherheitsarmatur (6) zwei hintereinander in dem Strömungskanal (10) angeordnete Sicherheitsventile (12, 48) aufweist, und
● jedes der Sicherheitsventile (12, 48) ansteuerseitig über eine Steuerleitung (38, 70) in Verbindung mit der Steuereinrichtung (40, 72) steht,
**dadurch gekennzeichnet, dass**
das stromaufwärtige Sicherheitsventil (12) einen mit einem Ventilkolben (28) verbundenen Ventilkegel (16) aufweist und derart stehend in der Sicherheitsarmatur (6) angeordnet ist, dass sich der Ventilkegel (16) unterhalb des Ventilkolbens (28) befindet, und das stromabwärtige Sicherheitsventil (48) einen mit einem Ventilkolben (52) verbundenen Ventilkegel (56) aufweist und derart auf dem Kopf stehend in der Sicherheitsarmatur (6) angeordnet ist, dass sich der Ventilkegel (56) oberhalb des Ventilkolbens (52) befindet.

2. Druchführendes System nach Anspruch 1, bei der der Öffnungsdruck des strom-aufwärts im Strömungskanal (10) angeordneten Sicherheitsventils (12) höher eingestellt ist als der Öffnungsdruck des weiter stromabwärts angeordneten Sicherheitsventils (48).

3. Druchführendes System nach Anspruch 1 oder 2, bei der der Schließdruck des stromaufwärts im Strömungskanal (10) angeordneten Sicherheitsventils (12) höher eingestellt ist als der Schließdruck des weiter stromabwärts angeordneten Sicherheitsventils (48).

4. Druchführendes System nach einem der Ansprüche 1 bis 3, bei der das strom-aufwärtige Sicherheitsventil (12) nach dem Entlastungsprinzip arbeitet.

5. Druchführendes System nach einem der Ansprüche 1 bis 4, bei der das strom-abwärtige Sicherheitsventil (48) nach dem Belastungsprinzip arbeitet.

6. Druchführendes System nach einem der Ansprüche 1 bis 5, bei der die beiden Sicherheitsventile (12, 48) unmittelbar zueinander benachbart in einem gemeinsamen Armaturengehäuse (82) untergebracht sind.

7. Druchführendes System nach einem der Ansprüche 1 bis 6, bei der die jeweilige Steuereinrichtung (40, 72) einen Druck-Weg-Umformer umfasst, in dem eine Druckdifferenz zwischen einem Druckraum und einem davon getrennten anderen Raum in eine Bewegung eines Stellkörpers umsetzbar ist, wobei mit dem Stellkörper ein Steuerteil zum Ansteuern des der Steuereinrichtung (40, 72) zugeordneten Sicherheitsventils (12, 48) auslösbar ist.

8. Druchführendes System nach Anspruch 7, bei der der Druckraum der Steuerein-richtung (40, 72) über eine der Druckentnahmeleitungen (42, 74) mit dem druckführenden System und der andere Raum über eine Drainageleitung (44, 86) mit einem Abblasebehälter verbunden ist.

## Claims

1. A pressure-conducting system having a pressure vessel (4) and a safety device (2) for excess-pressure protection, wherein
● the safety device (2) comprises a safety fitting (6) and a control device (40, 72),
● the control device (40, 72) is connected on the pulse side with the pressure-conducting system via a pressure-pickup line (42, 74) and operates according to the rest principle,
● the safety fitting (6) is arranged in a pressure line (8) connected to the pressure vessel (4),
● the interior of the pressure line (8) forms a flow channel (10) via which the flow medium (M) present in the pressure vessel (4) can flow off in the case of pressure relief, thus reducing the pressure,
● the safety fitting (6) includes two safety valves (12, 48) arranged one behind the other in the flow channel (10), and
● each of the safety valves (12, 48) is on the driving side in connection with the control device (40, 72) via a control line (38, 70),
**characterized in that**
the upstream safety valve (12) includes a valve cone (16) connected with a valve piston (28) and is arranged in an upright position in the safety fitting (6) in such a manner that the valve cone (16) is situated below the valve piston (28), and the downstream safety valve (48) includes a valve cone (56) connected with a valve piston (52) and is arranged in an upside-down position in the safety fitting (6) in such a manner that the valve cone (56) is situated above the valve piston (52).

2. The pressure-conducting system of claim 1, wherein the opening pressure of the safety valve (12) arranged upstream in the flow channel (10) is adjusted higher than the opening pressure of the safety valve (48) arranged further downstream.

3. The pressure-conducting system of claim 1 or 2, wherein the closing pressure of the safety valve (12) arranged upstream in the flow channel (10) is adjusted higher than the closing pressure of the safety valve (48) arranged further downstream.

4. The pressure-conducting system of any of claims 1 to 3, wherein the upstream safety valve (12) operates according to the relief principle.

5. The pressure-conducting system of any of claims 1 to 4, wherein the downstream safety valve (48) operates according to the loading principle.

6. The pressure-conducting system of any of claims 1 to 5, wherein the two safety valves (12, 48) are accommodated immediately adjacent to each other in a common fitting housing (82).

7. The pressure-conducting system of any of claims 1 to 6, wherein each control device (40, 72) comprises a pressure/path converter in which a pressure differential between a pressure chamber and another chamber separated therefrom can be converted into a movement of an adjusting element, it being possible to trigger with the adjusting element a control member for driving the safety valve (12, 48) assigned to the control device (40, 72).

8. The pressure-conducting system of claim 7, wherein the pressure chamber of the control device (40, 72) is connected via one of the pressure-pickup lines (42, 74) with the pressure-conducting system and the other chamber is connected via a blow-off line (44, 86) with a blow-off vessel.

## Revendications

1. Système conduisant la pression, ayant une cuve sous pression (4) et un dispositif de sécurité (2) pour protection de surpression, dans lequel
● le dispositif de sécurité (2) comprend une armature de sécurité (6) et un dispositif de commande (40, 72),
● le dispositif de commande (40, 72) est relié du côté d'impulsion avec le système conduisant la pression moyennant une conduite de captage de pression (42, 74) et fonctionne d'après le principe de repos,
● l'armature de sécurité (6) est placée dans une conduite de pression (8) reliée avec la cuve sous pression (4),
● l'intérieur de la conduite de pression (8) forme un canal de courant (10) par lequel le milieu de courant (M) présent dans la cuve sous pression (4) peut s'écouler dans le cas de décompression, réduisant ainsi la pression,
● l'armature de sécurité (6) comprend deux soupapes de sûreté (12, 48) placées l'une derrière l'autre dans le canal de courant (10), et
● du côté d'excitation, chacune des soupapes de sûreté (12, 48) est en connexion avec le dispositif de commande (40, 72) moyennant une conduite de commande (38, 70),
**caractérisé en ce que**
la soupape de sûreté (12) en amont comprend un cône de soupape (16) relié avec un piston à soupape (28) et est placée dans une position debout dans l'armature de sécurité (6) de façon que le cône de soupape (16) soit situé au-dessous du piston à soupape (28), et la soupape de sûreté (48) en aval comprend un cône de soupape (56) relié avec un piston à soupape (52) et est placée dans une position la tête en bas dans l'armature de sécurité (6) de façon que le cône de soupape (56) soit situé au-dessus du piston à soupape (52).

2. Système conduisant la pression selon la revendication 1, dans lequel la pression d'ouverture de la soupape de sûreté (12) placée en amont dans le canal de courant (10) est réglée à une valeur plus haute que la pression d'ouverture de la soupape de sûreté (48) placée plus en aval.

3. Système conduisant la pression selon la revendication 1 ou 2, dans lequel la pression de fermeture de la soupape de sûreté (12) placée en amont dans le canal de courant (10) est réglée à une valeur plus haute que la pression de fermeture de la soupape de sûreté (48) placée plus en aval.

4. Système conduisant la pression selon l'une quelconque des revendications 1 à 3, dans lequel la soupape de sûreté (12) en amont fonctionne d'après le principe de décharge.

5. Système conduisant la pression selon l'une quelconque des revendications 1 à 4, dans lequel la soupape de sûreté (48) en aval fonctionne d'après le principe de charge.

6. Système conduisant la pression selon l'une quelconque des revendications 1 à 5, dans lequel les deux soupapes de sûreté (12, 48) sont rangées immédiatement adjacentes l'une à l'autre dans un boîtier d'armature (82) commun.

7. Système conduisant la pression selon l'une quelconque des revendications 1 à 6, dans lequel chaque dispositif de commande (40, 72) comprend un convertisseur pression/chemin dans lequel un differentiel de pression entre une chambre de pression et une autre chambre séparée de celle-ci peut être converti en un mouvement d'un élément de réglage, il étant possible de déclencher par l'élément de réglage un membre de contrôle pour exciter la soupape de sûreté (12, 48) affectée au dispositif de commande (40, 72).

8. Système conduisant la pression selon la revendication 7, dans lequel la chambre de pression du dispositif de commande (40, 72) est relié moyennant une des conduites de captage de pression (42, 74) avec le système conduisant la pression et l'autre chambre est relié moyennant une conduite de purge (44, 86) avec un réservoir de purge.
